# EUROPEAN PATENT APPLICATION

(11) **EP 4 446 236 A1**
(43) Date of publication of application: **16.10.2024**
(21) Application number: 24170113.5
(22) Date of filing: 12.04.2024
(51) Int. Cl.: B64D 37/30, B64D 37/34, B64F 1/28, B64F 1/36

(54) **COOLING OF AIRCRAFT CRYOGENIC FUEL TANK ASSEMBLY**

(30) Priority: 14.04.2023 US 202318300594
(71) Applicant: RTX Corporation, Farmington, CT 06032 (US)
(72) Inventor: TERWILLIGER, Neil J., Cheshire, 06410 (US)
(74) Representative: Dehns

(57) **Abstract**

A cryogenic fuel system (32) for an aircraft (20) includes a fuel tank assembly (34) that is configured to store a cryogenic fuel in a liquid phase during aircraft operation, and a cooling system (36) that is associated with the fuel tank assembly (34). The cooling system (36) is configured to maintain the fuel tank assembly (34) within a predefined temperature range during non-flight operation.

## Description

### TECHNICAL FIELD

The present invention relates generally to an aircraft cryogenic fuel storage system and more specifically to a cryogenic fuel tank assembly for an aircraft.

### BACKGROUND

Reduction and/or elimination of carbon emissions generated by aircraft operation is a stated goal of aircraft manufacturers and airline operators. Alternate fuels have been proposed including ammonia, hydrogen and natural gas. Some alternate fuels require storage at temperatures well below ambient conditions to maintain them in a liquid form. Accordingly, aircraft will include operating systems that provide the required pressures and temperatures to maintain the fuel in a desired phase during flight operation.

Aircraft powered operating systems may not be available during periods where the aircraft is not operating, such, as during loading of passengers or extended maintenance operations. However, the requirement to maintain the fuel in the desired phase remains. Moreover, permitting the fuel tank to warm to ambient conditions during aircraft downtime may introduce undesired stresses that effect operational life.

### SUMMARY

A cryogenic fuel system for an aircraft according to a first aspect of the invention, among other possible things, includes, a fuel tank assembly that is configured to store a cryogenic fuel in a liquid phase during aircraft operation, and a cooling system that is associated with the fuel tank assembly. The cooling system is configured to maintain the fuel tank assembly within a predefined temperature range during non-flight operation.

In a further embodiment of the foregoing cryogenic fuel system, the cooling system includes a coupling to a ground based power source.

In a further embodiment of any of the foregoing cryogenic fuel systems, the cooling system is operable independent of power that is generated on the aircraft.

In a further embodiment of any of the foregoing cryogenic fuel systems, the fuel tank assembly includes a network of conduits for a coolant that are utilized to maintain the temperature of the fuel tank assembly, and are optionally utilized to maintain the temperature of the fuel tank assembly within the predefined temperature range.

In a further embodiment of any of the foregoing, the cryogenic fuel system includes an inlet for filling the network of conduits with the coolant. The network of conduits are fillable with coolant through the inlet during non-flight operation.

In a further embodiment of any of the foregoing cryogenic fuel systems, the network of conduits contain the coolant during aircraft operation.

In a further embodiment of any of the foregoing cryogenic fuel systems, the cooling system includes an aircraft located portion and a ground based portion. The ground based portion includes devices that are configured to circulate the coolant within the network of conduits.

In a further embodiment of any of the foregoing cryogenic fuel systems, the cooling system is configured to maintain a temperature of the fuel tank assembly that is independent of whether the fuel tank assembly is filled with fuel or is empty.

In a further embodiment of any of the foregoing cryogenic fuel systems, the predefined temperature range includes a lower limit above the temperature that is required for maintaining the cryogenic fuel in the liquid phase.

In a further embodiment of any of the foregoing cryogenic fuel systems the predefined temperature range includes an upper limit that is below a temperature required for maintaining the cryogenic fuel in the liquid phase.

This aspect of the invention may also extend to an aircraft propulsion system comprising a turbine engine configured to generate propulsive thrust utilizing a cryogenically stored fuel, and a cryogenic fuel system (32) as described above or herein and/or claimed in any of claims 1 to 9.

An aircraft propulsion system according to another aspect of the invention, among other possible things includes, a turbine engine that is configured to generate propulsive thrust that utilizes a cryogenically stored fuel, and a cryogenic fuel system that includes a fuel tank assembly that is configured to store a cryogenic fuel in a liquid phase during aircraft operation, and a cooling system that is associated with the fuel tank assembly. The cooling system is configured to maintain the fuel tank assembly within a predefined temperature range during non-flight operation.

In a further embodiment of the foregoing aircraft propulsion system, the cooling system is operable independent of power that is generated on the aircraft.

In a further embodiment of any of the foregoing aircraft propulsion systems, the cooling system is configured to maintain a temperature of the fuel tank assembly, and optionally maintain a temperature of the fuel tank assembly within the predefined temperature range, independent of whether the fuel tank assembly is filled with fuel or is empty.

In a further embodiment of any of the foregoing aircraft propulsion systems, the fuel tank assembly includes a network of conduits for a coolant that are utilized to maintain the temperature of the fuel tank assembly, and are optionally utilized to maintain the temperature of the fuel tank assembly within the predefined temperature range, and an inlet for filling the network of conduits with the coolant. The network of conduits are fillable with coolant through the inlet during non-flight operation.

In a further embodiment of any of the foregoing aircraft propulsion systems, the cooling system includes an aircraft located portion and a ground based portion, the aircraft located portion optionally connectable to the ground based portion. The ground based portion includes devices that are configured to circulate the coolant within the network of conduits.

In a further embodiment of any of the foregoing aircraft propulsion systems, the predefined temperature range includes an upper limit that is below a temperature required for maintaining the cryogenic fuel in the liquid phase.

A method of operating a cryogenic fuel system for an aircraft according to another aspect of the invention, among other possible things includes, storing a fuel in a fuel tank assembly at a cryogenic condition for use during aircraft operation, powering a cooling system that is associated with the fuel tank assembly during non-flight operation, and circulating a coolant within a network of conduits that are associated with the fuel tank assembly utilizing a ground based system to maintain the fuel tank assembly within a predefined temperature range during non-flight operation.

In a further embodiment of the foregoing method, the method includes filling the network of conduits with the coolant from the ground based system during non-flight operation.

In a further embodiment of any of the foregoing methods, the predefined temperature range includes a lower limit that is above the temperature required for maintaining the cryogenic fuel in the liquid phase.

In a further embodiment of any of the foregoing methods, the method includes removing the fuel from the fuel tank assembly during non-flight operation and maintaining the fuel tank assembly within the predefined temperature range once the fuel removed from the fuel tank assembly.

In a further embodiment of any of the foregoing methods, the predefined temperature range includes a lower limit that is determined to reduce boil off of fuel within the fuel tank assembly.

Although the different examples have the specific components shown in the illustrations, embodiments of this invention are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of a schematic view of an example aircraft cryogenic fuel system.
Figure 2 is a schematic view of the example aircraft cryogenic fuel system.

### DETAILED DESCRIPTION

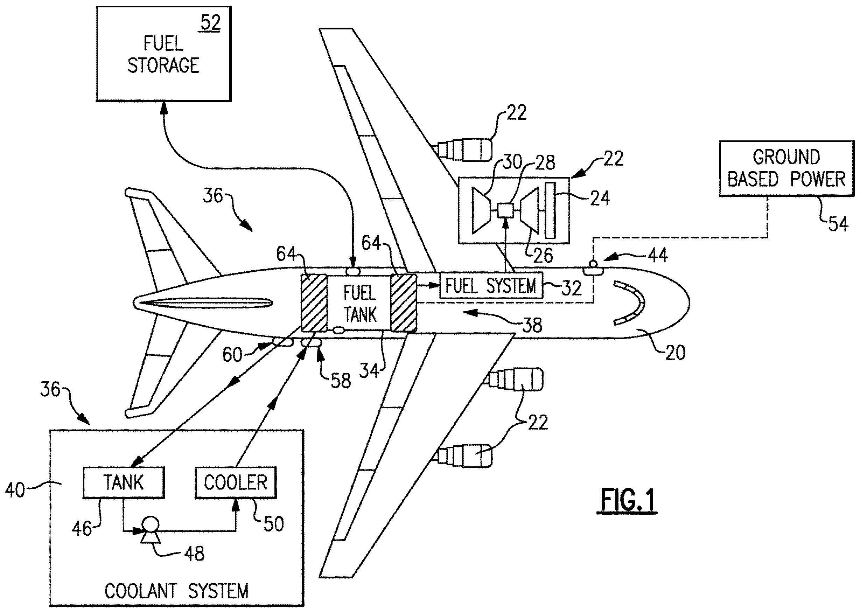

Figure 1 schematically illustrates an aircraft 20 that includes a cryogenic fuel system 32 and a cryogenic fuel tank assembly 34. A cooling system 36 is configured to maintain a temperature within a predefined range when the aircraft 20 is in a non-operating condition, such as when parked at an airport gate or for maintenance. Repeated thermal cycling between ambient and cryogenic temperatures can reduce operational life of the fuel tank assembly 34. The example cooling system 36 maintains the fuel tank assembly 34 at temperatures that maintain cryogenic conditions needed to maintain the fuel in a liquid phase. Moreover, the example cooling system 36 may also operate to reduce or eliminate thermal cycling of the fuel tank assembly 34 when empty.

Maintaining the cryogenic fuel in liquid form requires systems to maintain temperatures well below ambient temperatures. Even with such cryogenic systems, some amount of the liquid fuel changes phase into a gaseous form. The aircraft fuel system 32 distributes fuel to the engines 22 and includes features that accommodate and use the gaseous fuel during aircraft operation. However, when the aircraft is in a non-flight condition or not operating such as during passenger loading and unloading and any other extended period of non-flight operation or down time, the cryogenic fuel will boil off at some rate. Depending on ambient conditions and the duration of the down time, losses of fuel due to transformation of the liquid fuel to gaseous form can be significant.

Additionally, the cryogenic fuel tank assembly 34 operates at temperatures sufficiently low to maintain the fuel in a liquid form. For example, for a liquid hydrogen fuel, the fuel tank assembly 34 will operate to maintain the fuel at temperatures below -252 °C (-422 °F) at 1 bar pressure. The temperature may be -245 °C (-409 °F) at other realistic operating pressures. Other fuels require different temperature ranges to maintain fuel in the liquid form. Moreover, cryogenic temperatures are considered as temperature below -153°C (-243 °F). During normal aircraft operation, the operating temperature of the fuel tank assembly 34 does not fluctuate dramatically. Maintaining the lower temperature requires energy input to operate the cooling system 34. In some instances, during extended periods of down time, fuel may be removed from the fuel tank assembly 34 and saved in an off-plane fuel storage tank 52.

Without fuel present, the fuel tank assembly 34 does not need to maintain the cryogenic temperatures required for the fuel. However, permitting the fuel tank assembly 34 to warm to ambient temperatures followed by cooling back to cryogenic temperatures induces thermal cycle stresses and strains that may reduce operational life. Accordingly, the example cooling system 36 provides for maintaining the fuel tank assembly 34 within a predefined temperature range that limits thermal cycling. During such non-flight conditions wherein, the fuel tank assembly 34 does not contain fuel, the temperatures maybe maintained at around -100 °C (-148°F). The disclosed temperature ranges are provided by way of example and different temperatures may be appropriate for different fuels and configurations and are within the contemplation of this disclosure.

The example aircraft 22 includes cryogenic fueled turbine engines 22. Each of the turbine engines 22 include a fan section 24, a compressor section 26, a combustor section 28 and a turbine section 30 in flow series. Inlet air is compressed in the compressor section 26 and communicated to the combustor section 28 for mixing with a cryogenic fuel and ignited to generate a high energy gas flow that expands through the turbine section 30 to drive the compressor 26 and the fan 24.

Although an example turbine engine 22 is shown schematically by way of example, other turbine engine architectures could be utilized and are within the contemplation of this disclosure. Moreover, the configuration of the aircraft 20 is shown by way of example and other aircraft configurations could be utilized and are within the contemplation of this disclosure.

In one example embodiment, the cryogenic fuel is a hydrogen-based fuel. The hydrogen-based fuel may be hydrogen and/or be derived from hydrogen containing compounds such as ammonia. In another example embodiment, the cryogenic fuel is a liquid natural gas. It should be appreciated that although hydrogen, ammonia and liquid natural gas are disclosed by way of example, other cryogenic fuels could be utilized and are within the scope and contemplation of this disclosure.

The cryogenic fuel tank assembly 34 stores fuel onboard the aircraft 20 in liquid form. During downtime where the aircraft is not operating, the example cooling system 36 maintains the fuel tank assembly 34 within a predefined temperature range. If fuel remains within the fuel tank assembly 34, the temperature range is within limits determined to maintain the fuel in the liquid form and prevent and/or reduce boil off.

If fuel has been removed from the fuel tank assembly 34, such as moved to the ground based fuel storage tank 52, the predefined temperature range will include limits that reduce thermal cycling. In one example embodiment, the predefined temperature range includes a lower limit that is greater than that needed to maintain fuel in a liquid state. Because no fuel is present, the temperature need not be maintained at such low temperatures, but only to temperatures determined to limit thermal cycling.

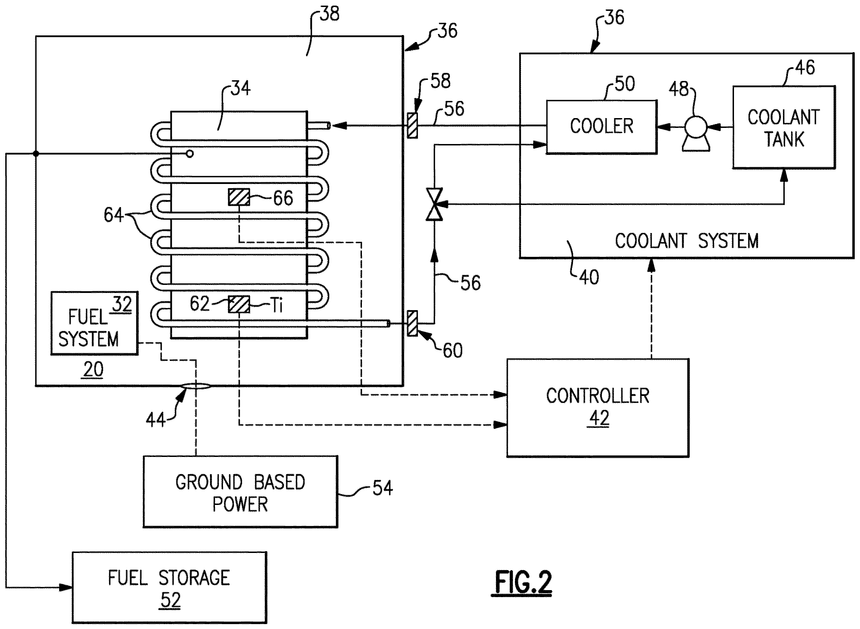

Referring to Figure 2 with continued reference to Figure 1, the example cooling system 36 is configured to operate when the aircraft 20 is not operating and therefore not generating power for an extended period. The cooling system 36 includes an aircraft portion 38 that is mounted within the aircraft 20 and a ground portion 40. The aircraft portion 38 includes the fuel tank assembly 34 that includes a plurality of conduits 64 for circulating a coolant 56 to maintain a desired temperature of the fuel tank assembly 34. The ground based portion 40 includes a tank 46 for coolant, a pump 48 and a coolant circulation system 50.

An inlet 58 and an outlet 60 are provided on the aircraft 20 to couple the aircraft portion 38 to the ground portion 40. The inlet 58 and outlet 60 provide for the flow of coolant 56 to the conduits 64 associated with the fuel tank assembly 34. The coolant circulation system 50 includes devices and structures for operation of a refrigerant cycle for maintaining the flow of coolant 56 at temperatures and pressures determined to keep the fuel tank assembly 34 within a desired temperature range.

In one example embodiment, the conduits 64 are filled with coolant 56 during aircraft operation. The coolant 56 within the conduits 64 may be utilized for cooling of the fuel tank assembly 34 during aircraft operation. Alternatively, the coolant 56 may simply be stored in the conduits 64 and only circulated when coupled to the ground based portion 40.

In another example embodiment, coolant 56 is emptied from the conduits 64 during aircraft operations and filled once coupled to the ground based portion 40. In such an example, coolant 56 from the coolant tank 46 is pumped through the coolant circulation system 50 and into the conduits 64. Once the conduits 64 are filled, the coolant 56 is circulated through the aircraft portion 38 and the ground portion 40 to maintain the fuel tank assembly 34 at desired temperatures.

A controller 42 is provided that controls operation to maintain the desired temperature of the fuel tank assembly 34. One or more sensors schematically indicated at 62 maybe associated with the fuel tank assembly 34 to provide temperature information to the controller 42. Other sensors system(s), schematically indicated at 66 may provide other information indicative of conditions of the fuel tank assembly 34 and/or of fuel stored within the fuel tank assembly 34. For example, a pressure of fuel within the fuel tank assembly may be communicated to the controller. Additionally, surface temperatures of portions of the fuel tank assembly 34 may be gathered and utilized to tailor cooling flow when the fuel tank assembly 34 is empty of fuel.

The controller 42 is programmed to operate the aircraft portion 38 and ground based portion 40 of the example cooling system 36 to maintain fuel stored within the fuel tank assembly at predefined temperatures. The controller 42 may also be programmed to maintain the fuel tank assembly 34 within a predefined temperature range to reduce thermal cycling when void of fuel.

The example controller 42 is a device and system for performing necessary computing or calculation operations. The example controller 42 may be specially constructed for this purpose, or it may comprise at least a general-purpose computer selectively activated or reconfigured by a computer program stored in the computer. Additionally, the controller 42 may be a dedicated device for operation of the fuel system, or may be a program stored on an engine or aircraft controller.

The controller 42 may include a computer program directing operation. Such a computer program and also data required for its execution may be stored in a computer readable storage medium, such as, but is not limited to, any type of disk including floppy disks, optical disks, CD-ROMs, magnetic-optical disks, read-only memories (ROMs), random access memories (RAMS), EPROMs, EEPROMs, magnetic or optical cards, application specific integrated circuits (ASICs), or any type of media suitable for storing electronic instructions, and each coupled to a computer system bus. Furthermore, the computer referred to may include a single processor or may be architectures employing multiple processor designs for increased computing capability.

In one example operational embodiment, fuel stored in the fuel tank assembly 34 is maintained at cryogenic conditions during aircraft operation. During such aircraft operation, systems powered by aircraft power storage and/or generating systems are utilized to power the cooling system 36. Fuel is dispersed through the fuel system 32 to the engines 22 to provide for the generation of power and propulsive thrust.

Once the aircraft 20 has landed and is no longer generating power, the cooling system 36 is powered by a ground based power source 54. The aircraft 20 includes a coupling 44 for communicating power for the ground based power source 54 to the cooling system 36. Most power required to operate the cooling system 36 is therefore provided by the ground based power system 54. The aircraft 20 may include power storage systems, such as batteries that may be utilized to partially power the cooling system. 36.

In another example operational embodiment, fuel within the aircraft mounted fuel tank assembly 34 is offloaded into a ground based fuel storage tank 52. In this example, the fuel is removed to the ground based fuel storage tank 52 to reduce demands on the cooling system 36. When the fuel tank assembly 34 is empty, the cooling system 36 only needs to maintain temperatures within a range determined to limit thermal cycling. Such a temperature range may not need to be as low as required to maintain the fuel in a liquid phase. However, the temperature range will be lower than ambient conditions to reduce thermal cycling on the fuel tank assembly 34.

In another example embodiment, fuel remains within the fuel tank assembly 34 and therefore cryogenic temperatures are maintained to hold the fuel in a liquid phase. Moreover, the fuel tank assembly 34 is maintained at temperatures determined to reduce boil off the cryogenic fuel.

In one example embodiment, coolant 56 is stored onboard the aircraft 20 within the conduits 64. Once the aircraft 20 is idle the ground portion 40 is coupled to the conduits 64 by accessible inlet 58 and outlet 60. The ground portion 40 includes the coolant circulation system 50 that provides for circulation and cooling of the coolant 56. Coolant may be added to fill the system and combined with coolant stored in the conduits. During the aircraft downtime, the ground portion 40 operates to circulate coolant to maintain the temperature of the fuel tank assembly 34.

In another example embodiment, the conduits 64 are emptied of coolant 56 during aircraft operation. Once the aircraft 20 is parked, the conduits 64 are filled with coolant 56 from the ground based portion 40. The ground based portion 40 includes the coolant tank 46 for storing coolant needed to fill the conduits. Accordingly, once the ground based portion 40 is coupled to the conduits 64, coolant 56 fills the conduits and begins circulating to maintain the fuel tank assembly 34 within the desired temperature range.

Operation of the ground based portion 40 in concert with the aircraft portion 38 is governed by the controller 42 based on information indicative of conditions of the fuel tank assembly 34. Sensor systems 62 and 64 provide information to the controller 42 that is utilized to tailor operation of the ground based system. The information provided to the controller 42 may include the temperature information of fuel within the tank assembly 34, the temperature of the tank assembly 34 itself, pressures or any other measurement that provides an indication of tank conditions that are useful for maintaining the tank assembly 34 within temperature within a desired range.

When the aircraft 20 is ready to resume operation, the ground based portion 40 is decoupled from the aircraft portion 38. In one example embodiment, decoupling of the ground based portion 40 includes removing coolant from the conduits 64 associated with the tank assembly 34. In another example embodiment, decoupling of the ground based portion 40 includes leaving coolant within the conduits 64. Once the ground based portion 40 is decoupled, operation of the fuel tank assembly 34 is taken over by aircraft powered systems.

Accordingly, the disclosed example cryogenic fuel system maintains fuel tank conditions during aircraft downtime utilizing ground based systems. Moreover, the disclosed example cryogenic fuel system maintains a temperature within a predefined range to either maintain fuel in a desired phase or to reduce thermal cycling of the fuel tank assembly.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A cryogenic fuel system (32) for an aircraft (20), the cryogenic fuel system (32) comprising:
a fuel tank assembly (34) configured to store a cryogenic fuel in a liquid phase during aircraft operation; and
a cooling system (36) associated with the fuel tank assembly (34), the cooling system (36) configured to maintain the fuel tank assembly (34) within a predefined temperature range during non-flight operation.

2. The cryogenic fuel system (32) of claim 1, wherein the cooling system (36) includes a coupling (44) to a ground based power source (54).

3. The cryogenic fuel system (32) of claim 1 or 2, wherein the cooling system (36) is operable independent of power generated on the aircraft (20).

4. The cryogenic fuel system (32) of any preceding claim, wherein the fuel tank assembly (34) includes a network of conduits (64) for a coolant (56) utilized to maintain the temperature of the fuel tank assembly (34) within the predefined temperature range.

5. The cryogenic fuel system (32) of claim 4, including an inlet (58) for filling the network of conduits (64) with the coolant (56), wherein the network of conduits (64) are fillable with coolant (56) through the inlet (58) during non-flight operation.

6. The cryogenic fuel system (32) of claim 4 or 5, wherein the network of conduits (64) contain the coolant (56) during aircraft operation.

7. The cryogenic fuel system (32) of any of claims 4 to 6, wherein the cooling system (36) includes an aircraft located portion (38) and a ground based portion (40), the ground based portion (40) includes devices configured to circulate the coolant (56) within the network of conduits (64).

8. The cryogenic fuel system (32) of any preceding claim, wherein the cooling system (36) is configured to maintain a temperature of the fuel tank assembly (34) independent of whether the fuel tank assembly (34) is filled with fuel or is empty.

9. The cryogenic fuel system (32) of any preceding claim, wherein the predefined temperature range includes an upper limit that is below a temperature required for maintaining the cryogenic fuel in the liquid phase.

10. An aircraft propulsion system comprising:
a turbine engine (22) configured to generate propulsive thrust utilizing a cryogenically stored fuel; and
a cryogenic fuel system (32) as claimed in any preceding claim.

11. A method of operating a cryogenic fuel system (32) for an aircraft (20), the method comprising:
storing a fuel in a fuel tank assembly (34) at a cryogenic condition for use during aircraft operation;
powering a cooling system (36) associated with the fuel tank assembly (34) during non-flight operation; and
circulating a coolant (56) within a network of conduits (64) associated with the fuel tank assembly (34) utilizing a ground based system to maintain the fuel tank assembly (34) within a predefined temperature range during non-flight operation.

12. The method of claim 11, including filling the network of conduits (64) with the coolant (56) from the ground based system during non-flight operation.

13. The cryogenic fuel system of any of claims 1 to 9, or the apparatus of claim 10, or the method of claim 11 or 12, wherein the predefined temperature range includes a lower limit above the temperature required for maintaining the cryogenic fuel in the liquid phase.

14. The method of any of claims 11 to 13, including removing the fuel from the fuel tank assembly (34) during non-flight operation and maintaining the fuel tank assembly (34) within the predefined temperature range once the fuel removed from the fuel tank assembly (34).

15. The method of any of claims 11 to 14, wherein the predefined temperature range includes a lower limit determined to reduce boil off of fuel within the fuel tank assembly (34).
